(19) Europäisches Patentamt
European Patent Office
Office européen des brevets

(11) **EP 4 354 628 A1**

(12) **EUROPEAN PATENT APPLICATION**
published in accordance with Art. 153(4) EPC

(43) Date of publication:
**17.04.2024 Bulletin 2024/16**

(21) Application number: **22923464.6**

(22) Date of filing: **01.12.2022**

(51) International Patent Classification (IPC):
**H01M 50/449** (2021.01)    **H01M 50/46** (2021.01)
**H01M 10/0525** (2010.01)    **H01M 10/613** (2014.01)

(52) Cooperative Patent Classification (CPC):
**H01M 10/0525; H01M 10/613; H01M 50/409;**
**H01M 50/449; H01M 50/46;** Y02E 60/10

(86) International application number:
**PCT/CN2022/135796**

(87) International publication number:
**WO 2023/142673 (03.08.2023 Gazette 2023/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.01.2022   CN 202210099661**

(71) Applicant: **Contemporary Amperex Technology
Co., Limited
Ningde City, Fujian 352100 (CN)**

(72) Inventors:
• **ZHANG, Cuiping
  Ningde City, Fujian 352100 (CN)**
• **HAN, Changlong
  Ningde City, Fujian 352100 (CN)**
• **FAN, Peng
  Ningde City, Fujian 352100 (CN)**
• **WU, Zeli
  Ningde City, Fujian 352100 (CN)**
• **HUANG, Lei
  Ningde City, Fujian 352100 (CN)**

(74) Representative: **Kraus & Lederer PartGmbB
Thomas-Wimmer-Ring 15
80539 München (DE)**

(54) **MULTILAYER COMPOSITE SEPARATOR FILM, SECONDARY BATTERY COMPRISING SAME, AND ELECTRICAL DEVICE**

(57)    The present application discloses a multi-layer composite separator, a secondary battery and an electrical device containing the same, the multi-layer composite separator including a first substrate layer and a second substrate layer, wherein the multi-layer composite separator further includes a water-scavenging material and an acid-scavenging material, the acid-scavenging material being disposed between the first substrate layer and the second substrate layer, and the water-scavenging material being disposed on at least one surface of the first substrate layer and the second substrate layer. The secondary battery of the present application has high energy density and long service life at the same time.

5

**FIG. 1**

EP 4 354 628 A1

**Description**

**CROSS-REFERENCE TO RELATED APPLICATIONS**

This application claims priority to Chinese Patent Application No. 202210099661.9 entitled "multi-layer composite separator, secondary battery and electrical device containing the same" and filed on January 27, 2022, which is incorporated herein by reference in its entirety.

**TECHNICAL FIELD**

The present application belongs to the technical field of battery, in particular to a multi-layer composite separator, a secondary battery and an electrical device containing the same.

**BACKGROUND**

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their energy density and service life are receiving more and more attention. Thus, effective technical means are needed to improve the energy density and extend the service life of secondary batteries.

**SUMMARY**

An object of the present application is to provide a multi-layer composite separator, a secondary battery and an electrical device containing the same, which material enables the secondary battery to have high energy density and long service life.

A first aspect of the present application provides a multi-layer composite separator comprising a first substrate layer and a second substrate layer, wherein the multi-layer composite separator further comprises a water-scavenging material and an acid-scavenging material, the acid-scavenging material being disposed between the first substrate layer and the second substrate layer, and the water-scavenging material being disposed on at least one surface of the first substrate layer and the second substrate layer.

The multi-layer composite separator of the present application employs both a water-scavenging material and an acid-scavenging material, which effectively immobilizes free water and HF inside the battery on the water-scavenging material and the acid-scavenging material under various effects such as physical adsorption and chemical bonding, and thus is able to continually and efficiently reduce the content of free water and HF inside the battery and thereby to reduce the negative effects of the water and HF on the secondary battery, and enables the secondary battery to have both high energy density and long service life.

In some embodiments of the present application, the multi-layer composite separator comprises a functional layer disposed between the first substrate layer and the second substrate layer, wherein the functional layer comprises a water-scavenging material and an acid-scavenging material.

In some embodiments of the present application, based on the total mass of the functional layer, a mass percentage of the acid-scavenging material is from 20% to 50% and a mass percentage of the water-scavenging material is from 15% to 50%.

In some embodiments of the present application, the functional layer has a thickness of 1 $\mu$m to 100 $\mu$m. Optionally, the functional layer has a thickness of 4 $\mu$m to 50 $\mu$m. When the thickness of the functional layer is in a suitable range, it can continuously and effectively reduce the free water and HF content inside the battery during a long-term charging and discharging cycle of the secondary battery, and at the same time ensure that the secondary battery has a high energy density and good kinetic performance.

In some embodiments of the present application, a mass ratio of the acid-scavenging material to the water-scavenging material in the multi-layer composite separator is from 1 to 3. Optionally, the mass ratio of the acid-scavenging material to the water-scavenging material in the multi-layer composite separator is from 1 to 1.5. The mass of the acid-scavenging material may be greater than or equal to the mass of the water-scavenging material, so as to ensure that the acid-scavenging material can continuously and effectively reduce free HF content inside the battery, and thereby reduce the free water content inside the battery.

In some embodiments of the present application, the water-scavenging material comprises at least one of a molecular sieve or a super absorbent resin.

In some embodiments of the present application, the molecular sieve has a static water adsorption amount of 15% or more at 25°C and 30% relative humidity.

In some embodiments of the present application, the molecular sieve has a pore size of 0.3 nm to 50 nm, optionally 0.5 nm to 15 nm. When the pore size of the molecular sieve is in a suitable range, the molecular sieve can have a better water adsorption capacity as well as a poorer water desorption capacity, thereby ensuring that the secondary battery has a lower content of free water and HF during a long-term charging and discharging cycling, and thus the secondary battery has a better cycling performance.

In some embodiments of the present application, the molecular sieve has a volume-averaged particle size Dv50 of 1 $\mu$m to 10 $\mu$m, optionally 2 $\mu$m to 6 $\mu$m. When the molecular sieve has a volume-averaged particle size Dv50 in a suitable range, it ensures that the secondary battery has a better kinetic performance at the same time.

In some embodiments of the present application, the molecular sieve has a specific surface area of 350m$^2$/g~1000m$^2$/g, optionally 650m$^2$/g~800m$^2$/g. When the specific surface area of THE molecular sieve is in a suitable range, the molecular sieve can have a better water adsorption capacity, so as to ensure that the secondary battery has a lower content of free water and HF during a long-term charging and discharging cycle, thereby ensuring that the secondary battery has less free water and HF content during long-term charging and discharging cycles, and thus the secondary battery has better cycling performance.

In some embodiments of the present application, the molecular sieve comprises at least one of silica-based molecular sieve SBA-15 and titanium silicon molecular sieve TS-1. SBA-15 and TS-1 can have mesoporous structure, thicker pore wall, higher pore volume, and better hydrothermal stability, so as to ensure that the secondary battery has less free water and HF content during long-term charging/discharging cycle of the secondary battery and hence better cycle performance.

In some embodiments of the present application, the super absorbent resin has a water absorbency of more than 100 times.

In some embodiments of the present application, the super absorbent resin has a solubility in water at 25°C of less than 5%.

In some embodiments of the present application, the super absorbent resin comprises at least one of starch grafted acrylonitriles, starch grafted acrylics, starch grafted acrylamides, cellulose grafted acrylonitriles, cellulose grafted acrylics, cellulose grafted acrylamides, polyvinylalcohols, polyacrylic acids (salts), polyacrylamides, polyoxyethylenes, polyurethanes, vinyl acetate copolymers, and the respective modified compounds thereof. Optionally, the super absorbent resin comprises at least one of a copolymer of polyvinyl alcohol and cyclic anhydride, a sodium polyacrylate resin, a copolymer of vinyl acetate and acrylate.

In some embodiments of the present application, the acid-scavenging material has a pH of 7 to 11.5. Optionally, the acid-scavenging material has a pH of 7 to 10. In the present application, the acid-scavenging material is weakly alkaline, which can immobilize HF and water molecules through an acid-base neutralization reaction, and thus be able to continually and efficiently reduce the content of free water and HF inside the battery, thereby reducing the negative effects of water and HF on the secondary battery, and enabling the secondary battery to simultaneously have high energy density and long service life.

In some embodiments of the present application, the acid-scavenging material comprises at least one of an inorganic alkaline lithium salt and an organic compound.

In some embodiments of the present application, the inorganic alkaline lithium salt comprises at least one of lithium carbonate and lithium bicarbonate.

In some embodiments of the present application, the molecular structure of the organic compound comprises at least one of an amide group, a silicon-nitrogen group, a silicon group, a carbon-nitrogen group, a sulfonate group, and a carboxylate ion. Optionally, the organic compound comprises at least one of lithium acetate, hexamethyldisilazane, heptamethyldisilazane, trimethylsilyl diethylamine, trimethylsilyl methanesulfonate, bis(trimethylsilyl)carbodiimide, N,N-dimethylpropionamide, N,N-dimethylacetamide, and N,N-dimethylformamide.

A second aspect of the present application provides a secondary battery comprising a positive electrode plate, a negative electrode plate, an electrolyte, and a multi-layer composite separator of the first aspect of the present application.

In some embodiments of the present application, based on the total mass of the positive electrode plate and the negative electrode plate, the content of water in the secondary battery is A ppm; based on the total mass of the multi-layer composite separator, the content of the water-scavenging material is B ppm, and A and B satisfy the following relation: $3 \leq B/A \leq 5$. When B/A is in a suitable range, it is possible to continually and efficiently reduce the free water and HF content inside the battery, thereby reducing the negative effects of water and HF on the secondary battery, so that the secondary battery has a long service life, and at the same time the secondary battery has a high energy density.

Optionally, $20 \leq A \leq 600$.

Optionally, $60 \leq B \leq 3000$.

In some embodiments of the present application, based on the total mass of the electrolyte, the content of HF in the electrolyte is C ppm; based on the total mass of the electrolyte, the content of the acid-scavenging material is D ppm, and C and D satisfy the following relation: $1 \leq D/C \leq 2$. When D/C is in a suitable range, the content of free water and HF inside the battery can be continuously and effectively reduced, thereby reducing the negative effects of water and HF on the secondary battery, so that the secondary battery has a long service life, and the secondary battery further has a high energy density.

Optionally, $20 \leq C \leq 500$.

Optionally, $20 \leq D \leq 1000$.

In some embodiments of the present application, the pH of the acid-scavenging material, the content C ppm of HF in the electrolyte, and the content D ppm of the acid-scavenging material further satisfy the following relation: $lgpH+0.5 \leq D/C \leq 2$. At this time, the free HF as well as the water content inside the secondary battery is less, and the secondary battery can have a longer service life and a higher energy density.

A third aspect of the present application provides an electrical device comprising the secondary battery of the second aspect of the present application.

The secondary battery of the present application comprises a multi-layer composite separator that employs both a water-scavenging material and an acid-scavenging material, the multi-layer composite separator being able to continually and effectively reduce the content of free water and HF inside the battery, and thereby reduce the negative effects of water and HF on the secondary battery, so that the secondary battery of the present application can simultaneously have both a high energy density and a long service life. The electrical device of the present application comprises the secondary battery provided in the present application and thus has at least the same advantages as the secondary battery.

**DESCRIPTION OF THE DRAWINGS**

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.

**DETAILED DESCRIPTION**

Hereinafter, embodiments of the multi-layer composite separator of the present application, and the secondary battery and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, unless otherwise stated, the terms "first", "second", etc. are used only for descriptive purposes and are not to be understood as indicating or implying relative importance or implicitly specifying the number of technical features indicated. The term "more than one" means two or more, unless otherwise stated and specifically limited.

If not otherwise specified, in the present application, the term "active ions" refers to ions that can be inserted and extracted back and forth between the positive and negative electrodes of the secondary battery, including, but not limited to, lithium ions, sodium ions, and the like.

In the present application, the term "molecular sieve" refers to a class of materials with uniformly sized pores, whose crystalline state is mainly silicate or silica-aluminate; the term "super absorbent resin" refers to a class of synthetic resins that have hydrophilic groups, can absorb a large amount of water to swell and retain the water from flowing out.

Secondary batteries, also known as rechargeable batteries or accumulators, are batteries that can be recharged after discharge to activate the active material and continue to be used. Typically, a secondary battery consists of a positive electrode, a negative electrode, an electrolyte, and a separator membrane. During charging and discharging process of the battery, active ions are inserted and extracted back and forth between the positive electrode plate and the negative electrode plate. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate. At present, secondary batteries are widely used in energy storage power systems such as hydro, thermal, wind and solar power stations, as well as in many fields such as electric tools, electric bicycles, electric motorcycles, electric vehicles, military equipment, aerospace and so on.

With the application and promotion of secondary batteries, their energy density and service life have received more and more attention, so the development of secondary batteries with high energy density and long service life is a common pursuit of the industry. However, during the long-term charging and discharging cycles of secondary batteries, the bound water in the electrode pads will be gradually released and enter into the electrolyte. The water and the fluorine-containing electrolyte salt in the electrolyte are prone to a side reaction and generate HF, which not only induces decomposition of organic solvents in the electrolyte (e.g., inducing ring-opening polymerization of vinyl carbonate), but also destroys the protective film on the surface of the active material of the positive and negative electrodes. In particular, when HF destroys the protective film on the surface of the positive electrode active material, the transition metal ions in the crystal structure of the positive electrode active material will leach out, which in turn leads to the destruction of the crystal structure, affecting the deintercalation and intercalation of the active ions, and decreasing the energy density and service life of the secondary battery. Therefore, effective technical means are needed to reduce the negative impact of water on the secondary battery.

The strategies usually adopted in the prior art include (1) adding additives to the electrolyte to improve the stability of the electrolyte, and (2) setting a cladding layer on the surface of the positive electrode active material. However, the additives are insufficient to complex all the HF when added in small amounts, and tend to change the kinetic properties of the electrolyte when added in large amounts, affecting the kinetic performance of the secondary battery; and setting a cladding layer on the surface of the positive electrode active material is not only a complicated process, but also tends to affect the capacity exertion of the secondary battery and reduce the energy density of the secondary battery.

In view of the above problems, the inventors, after a lot of research and practice, and the use of reverse thinking and horizontal thinking proposed a new type of multi-layer composite separator, which can effectively reduce the free water and HF inside the battery, so that the secondary battery have high energy density and long service life at the same time.

## Multi-layer composite separator

A first aspect of the present application provides a multi-layer composite separator comprising a first substrate layer and a second substrate layer, wherein the multi-layer composite separator further comprises a water-scavenging material and an acid-scavenging material, the acid-scavenging material being disposed between the first substrate layer and the second substrate layer, and the water-scavenging material being disposed on at least one surface of the first substrate layer and the second substrate layer.

The inventors have found after much research and practice that the combined water in the electrode plate, after being released into the electrolyte, will react with the fluorine-containing electrolyte salt to generate HF, and similarly, the HF can react with the inorganic electrolyte salt component (e.g., lithium carbonate, etc.) in the solid electrolyte interfacial film on the surface of the negative electrode active material to be converted into water again, and therefore adopting a water-scavenging material or an acid-scavenging material alone does not effectively improve the service life of the secondary battery. Therefore, the use of a single water-scavenging material or acid-scavenging material cannot effectively improve the service life of the secondary battery. The multi-layer composite separator of the present application adopts both water-scavenging material and acid-scavenging material, and effectively fixes the free water and HF inside the battery on the water-scavenging material and the acid-scavenging materials under the effects of physical adsorption, chemical bonding, and other effects, so as to continuously and effectively reduce the free water and HF content inside the battery, and thus reduce the negative effects of the water and HF on the secondary battery, so that the secondary battery can simultaneously have high energy density and long service life.

The multi-layer composite separator of the present application has a multi-layer structure, and the acid-scavenging material is located between the two substrate layers, so as to avoid the oxidative decomposition reaction of the acid-scavenging material under high voltage, and ensure that the acid-scavenging material has a better effect.

The present application has no particular limitation on the location of the water-scavenging material, which may be located on at least one surface of the first substrate layer and the second substrate layer. For example, both the first substrate layer and the second substrate layer have two surfaces opposite each other in their own thickness direction, so that the water-scavenging material may be located on at least one of the four surfaces. For example, the water-scavenging material is located on a surface of the first substrate layer away from the acid-scavenging material, proximate to the electrode plate, or on a surface of the second substrate layer away from the acid-scavenging material, proximate to the electrode plate, or between the first substrate layer and the second substrate layer.

In some embodiments, the multi-layer composite separator comprises a functional layer disposed between the first substrate layer and the second substrate layer, and the functional layer comprises a water-scavenging material as well as an acid-scavenging material.

The thickness of the functional layer is not specifically limited and can be selected according to actual needs. When the thickness of the functional layer is small, the water-scavenging material and the acid-scavenging material loaded therein are small, which may not be able to continuously and effectively reduce the free water and HF content inside the secondary battery during the long-term charging and discharging cycle of the secondary battery; and when the thickness of the functional layer is large, the secondary battery gains weight significantly, and the mass energy density and kinetic performance may decrease. Therefore, the thickness of the functional layer should not be excessively small or excessively large. In some embodiments, the thickness of the functional layer may be 1 $\mu$m~100 $\mu$m. Optionally, the thickness of the functional layer is 2 $\mu$m~80 $\mu$m, 2 $\mu$m~60 $\mu$m, 2 $\mu$m~50 $\mu$m, 2 $\mu$m~40 $\mu$m, 2 $\mu$m~30 $\mu$m, 2 $\mu$m~20 $\mu$m, 4 $\mu$m~80 $\mu$m, 4 $\mu$m~60 $\mu$m, 4 $\mu$m~50 $\mu$m, 4 $\mu$m~40 $\mu$m, 4 $\mu$m~30 $\mu$m, 4 $\mu$m~20 $\mu$m, 6 $\mu$m~80 $\mu$m, 6 $\mu$m~60 $\mu$m, 6 $\mu$m~50 $\mu$m, 6 $\mu$m~40 $\mu$m, 6 $\mu$m~30 $\mu$m, or 6 $\mu$m~20 $\mu$m. The thickness of the functional layer in the suitable range can continuously and effectively reduce the free water and HF content inside the secondary battery during the long term charging/discharging cycle of the secondary battery. At the same time, the secondary battery is guaranteed to have a high energy density and good kinetic performance.

The specific content of each component in the functional layer is not specifically limited, and can be selected according to actual needs. In some embodiments, optionally, based on the total mass of the functional layer, the content of the acid-scavenging material is from 20% to 50% by mass, and the content of the water-scavenging material is from 15% to 50% by mass.

In some embodiments, the functional layer may further comprise a binder. The present application does not specifically limit the type of the binder, which may be selected according to actual needs. As an example, the binder for the functional layer includes, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In some embodiments, the content of the binder may be from 1% to 35% by mass, based on the total mass of the functional layer.

The acid-scavenging material mainly reduces the free HF content inside the battery through chemical bonding (e.g., hydrogen bonding, covalent bonding, etc.). Therefore, in the multi-layer composite separator of the present application, the mass of the acid-scavenging material may be greater than or equal to the mass of the water-scavenging material, so as to be able to ensure that the acid-scavenging material can continually and efficiently reduce the free HF content inside the battery, and thus reduce the free water content inside the battery. In some embodiments, the mass ratio of the acid-scavenging material to the water-scavenging material in the multi-layer composite separator may be from 1 to 3. Optionally, the mass ratio of the acid-scavenging material to the water-scavenging material in the multi-layer composite separator is from 1 to 2.5, from 1 to 2, or from 1 to 1.5.

In some embodiments, the water-scavenging material may comprise at least one of a molecular sieve, a super absorbent resin (Super Absorbent Polymer, SAP).

For the purposes of the present application, molecular sieves having a higher water absorption are preferred. For example, in some embodiments, the static water adsorption of the molecular sieve may be 15% or more at 25°C and 30% relative humidity. The test of the static water adsorption of the molecular sieve may be referred to GB 6287-86 (Method for determination of static water adsorption of molecular sieves).

According to the definition of the International Union of Pure and Applied Chemistry (IUPAC), porous materials with a pore size between 2 nm and 50 nm are called mesoporous materials, porous materials with a pore size of less than 2 nm are called microporous materials, and porous materials with a pore size of more than 50 nm are called macroporous materials. In the present application, the molecular sieve may include at least one of a microporous molecular sieve, and a mesoporous molecular sieve. Compared to the macroporous molecular sieve, the microporous molecular sieve and the mesoporous molecular sieve may have a higher specific surface area, thereby enabling them to play a better role in water adsorption. At the same time, the pore size of the molecular sieve should not be less than 0.3 nm, and when the pore size of the molecular sieve is too small, it is difficult for the water molecules to be adsorbed into the pore structure of the molecular sieve, so that it is difficult for the molecular sieve to have a better adsorption and water removal effect.

In some embodiments, the molecular sieve may have a pore size of 0.3nm~50nm. optionally, the molecular sieve has a pore size of 0.4nm~50nm, 0.5nm~50nm, 1nm~50nm, 2nm~50nm, 0.3nm~35nm, 0.4nm~35nm, 0.5nm~35nm, 1nm~35nm, 2nm~ 35nm, 0.3nm~25nm, 0.4nm~25nm, 0.5nm~25nm, 1nm~25nm, 2nm~25nm, 0.3nm~15nm, 0.4nm~15nm, 0.5nm~15nm, 1nm~15nm, 2nm~15nm, 0.3nm~11nm, 0.4nm~11nm, 0.5nm~11nm, 1nm~11nm, 2nm~11nm, 0.3nm~8nm, 0.4nm~8nm, 0.5nm~8nm, 1nm~8nm, or 2nm~8nm.When the pore size of the molecular sieve is in a suitable range, the molecular sieve can have better water adsorption capacity and worse water desorption capacity, thereby ensuring that the secondary battery has less free water and HF content during the secondary battery's long-term charging and discharging cycling process, and thus the cycling performance of the secondary battery is better.

When the volume average particle size $Dv50$ of the molecular sieve is larger, the transmission path of active ions becomes longer, and the kinetic performance of the secondary battery may be decreased; when the volume-averaged particle size $Dv50$ of the molecular sieve is smaller, the risk of clogging of holes in the separator may be increased, and then the kinetic performance of the secondary battery may also be decreased. In order to ensure that the secondary battery simultaneously has a better kinetic performance, the volume average particle size $Dv50$ of the molecular sieve should not be excessively large or excessively small. In some embodiments, the volume average particle size $Dv50$ of the molecular sieve may be 1 $\mu$m~ 10 $\mu$m. optionally, the volume average particle size $Dv50$ of the molecular sieve is 1 $\mu$m~ 10 $\mu$m, 1 $\mu$m~8 $\mu$m, 1 $\mu$m~6 $\mu$m, 1 $\mu$m~4 $\mu$m, 2 $\mu$m~ 10 $\mu$m, 2 $\mu$m~8 $\mu$m, 2 $\mu$m~6 $\mu$m, 2 $\mu$m~4 $\mu$m, 4 $\mu$m~ 10 $\mu$m, 4 $\mu$m~ 10 $\mu$m, 4 $\mu$m~ 10 $\mu$m, 4 $\mu$m~10 $\mu$m, 4 $\mu$m~10 $\mu$m, 4 $\mu$m~8 $\mu$m, or 4 $\mu$m~6 $\mu$m.

In the present application, the volume average particle size $Dv50$ of the material has a meaning well known in the art, which indicates the particle size when the cumulative volume distribution percentage of the material reaches 50%, and can be determined by instruments and methods well known in the art. For example, it can be conveniently determined using a laser particle size analyzer, such as the Mastersizer 2000E laser particle size analyzer from Malvern Instruments Ltd. of the United Kingdom, with reference to GB/T 19077-2016 (Particle size analysis-Laser diffraction method).

When the molecular sieve has a high specific surface area (BET), it is capable of rapidly adsorbing free water inside the battery, but the specific surface area of the molecular sieve should not be excessively high, at which time the water adsorption capacity of the molecular sieve will not be further increased, while the manufacturing cost is significantly increased; at the same time, the molecular sieve may also absorb more electrolyte, which is not conducive to the wetting of electrolyte with electrode plate. At the same time, the specific surface area of the molecular sieve should not be excessively small. When the specific surface area of the molecular sieve is small, the adsorption capacity of the free water inside the battery is poor, which in turn may not be able to ensure that the secondary battery has less free water and HF content during long-term charging and discharging cycles. In some embodiments, the specific surface area of the molecular sieve may be 350m$^2$/g~1000m$^2$/g. Optionally, the specific surface area of the molecular sieve is

$350m^2/g\sim900m^2/g$, $350m^2/g\sim800m^2/g$, $350m^2/g\sim700m^2/g$, $350m^2/g\sim600m^2/g$, $350m^2/g\sim500m^2/g$, $500m^2/g\sim1000m^2/g$, $500m^2/g\sim900m^2/g$, $500m^2/g\sim800m^2/g$, $500m^2/g\sim700m^2/g$, $500m^2/g\sim600m^2/g$, $650m^2/g\sim1000m^2/g$, $650m^2/g\sim900m^2/g$, $650m^2/g\sim800m^2/g$, or $650m^2/g\sim700m^2/g$. When the specific surface area of the molecular sieve is in a suitable range, the molecular sieve can have a better water adsorption capacity, thereby ensuring that the secondary battery has less free water and HF content during long-term charge/discharge cycling, and thus the secondary battery has a better cycling performance.

In the present application, the specific surface area of the material has a meaning known in the art, and can be determined by instruments and methods known in the art. For example, according to GB/T 19587-2017, analysis of the specific surface area by the nitrogen adsorption can be used, and the specific surface area can be calculated by the BET (Brunauer Emmett Teller) method, in which the analysis of the specific surface area by the nitrogen adsorption can be carried out by a specific surface and pore size distribution analyzer (Type: Tri Star II 3020) from Micromeritics, USA.

The type of the molecular sieve is not specifically limited and can be selected according to actual needs. In some embodiments, categorized according to pore structure, the molecular sieves may include, but are not limited to, at least one of A-type molecular sieves (e.g., 3A-type molecular sieves, 4A-type molecular sieves, 5A-type molecular sieves, etc.), X-type molecular sieves (e.g., 10X-type molecular sieves, 13X-type molecular sieves), and Y-type molecular sieves. In some embodiments, categorized by backbone elements, the molecular sieve may include, but is not limited to, at least one of a silica-aluminum molecular sieve, a titanium-silica molecular sieve, a phosphorus-aluminum molecular sieve.

As an example, in some embodiments, the molecular sieve may include, but is not limited to, at least one of silica-based molecular sieve SBA-15, and titanium silicon molecular sieve TS-1. SBA-15 and TS-1 may have a mesoporous structure as well as having thicker pore walls, higher pore volume, and better hydrothermal stability, and thus ensure that the secondary battery has a lower free water and HF content during long-term charging and discharging cycles, and thus the secondary battery has better cycling performance. Of course, SBA-15 and TS-1 can also have microporous structure.

Super absorbent resins having a high water absorption are preferred in the present application. In some embodiments, the super absorbent resin may have a water absorbency of more than 100 times. The water absorbency is the ratio of the mass of water that can be absorbed per unit mass of the super absorbent resin to its own mass. The test of the water absorbency of the super absorbent resin may refer to GB/T 22875-2008, GB/T 22905-2008.

In the present application, a super absorbent resin having a high water absorption capacity and not easily dissolved in water is preferred. In some embodiments, the solubility of the super absorbent resin in water at 25°C may be below 5%.

By way of example, in some embodiments, the super absorbent resin may include, but is not limited to, at least one of starch grafted acrylonitriles, starch grafted acrylics, starch grafted acrylamides, cellulose grafted acrylonitriles, cellulose grafted acrylics, cellulose grafted acrylamides, polyvinyl alcohols, polyacrylic acids (salts), polyacrylamides, polyoxyethylenes, polyurethanes, vinyl acetate copolymers, and the respective modified compounds thereof.

Optionally, the super absorbent resin comprises at least one of a copolymer of polyvinyl alcohol and cyclic anhydride, a sodium polyacrylate resin, a copolymer of vinyl acetate and acrylate.

The acid-scavenging material should not be selected as having an acidic nature or being acidic after hydrolysis, which may not be able to effectively reduce the free HF content inside the battery. At the same time, the alkalinity of the acid-scavenging material should not be excessively strong. When the alkalinity of the acid-scavenging material is strong, it is easy to induce decomposition of the electrolyte salt, increase the free side reaction inside the battery, reduce the energy density, service life and kinetic performance of the secondary battery, and even increase the HF content. In some embodiments, the acid-scavenging material has a pH of 7 to 11.5. In the present application, the acid-scavenging material has a weak alkalinity, which can immobilize HF and water molecules through acid-base neutralization reaction, thereby being able to consistently and effectively reduce the content of free water and HF inside the battery, and thus reduce the negative effects of water and HF on the secondary battery, so as to enable the secondary battery to have both high energy density and long service life. Optionally, the acid-scavenging material has a pH of 7 to 10. Further, the acid-scavenging material has a pH of 7.2 to 9.3.

In the present application, the pH of the acid-scavenging material is known in the art in the sense that it can be determined by instruments and methods known in the art. An exemplary test method comprises the step of adding 5 g of the acid-scavenging material to 100 g of deionized water at 25°C., fully stirring to dissolve and then testing the pH of the solution with reference to GB/T 6920-86, as the pH of the acid-scavenging material.

In some embodiments, the acid-scavenging material may include at least one of an inorganic alkaline lithium salt, and an organic compound.

In some embodiments, the inorganic alkaline lithium salt may include, but is not limited to, at least one of lithium carbonate, and lithium bicarbonate.

In some embodiments, the molecular structure of the organic compound may include at least one of an amide group, a silicon-nitrogen group, a silicon group, a carbon-nitrogen group, a sulfonate group, and a carboxylate ion. For example, the organic compound includes, but not limited to, at least one of organic alkaline lithium salts and organic small molecule compounds. As an example, the organic compounds comprise at least one of lithium acetate, hexamethyldisilazane, heptamethyldisilazane, trimethylsilyl diethylamine, trimethylsilyl methanesulfonate, bis(trimethylsilyl)carbodiimide, N,N-dimethylpropionamide, N,N-dimethylacetamide, and N,N-dimethylformamide.

In the present application, the acid-scavenging material can immobilize HF and water molecules through chemical reactions (e.g., acid-base neutralization reactions), hydrogen bonding, etc., so as to be able to continuously and effectively reduce the content of free water and HF inside the battery, and thus reduce the negative impact of water and HF on the secondary battery, so that the secondary battery can simultaneously have high energy density and long service life.

The present application has no particular limitation on the thickness of the first substrate layer and the second substrate layer, which can be selected according to the actual needs. The present application has no particular limitation on the type of the first substrate layer and the second substrate layer, and any well-known porous structural membrane with good chemical stability and mechanical stability can be selected. In some embodiments, the material for the first substrate layer and the second substrate layer may include at least one of glass fiber, nonwoven fabric, polyethylene, polypropylene and polyvinylidene fluoride. The material for the first substrate layer and the second substrate layer may be the same or different.

The multi-layer composite separator of the present application does not exclude other components than those mentioned above. In some embodiments, the multi-layer composite separator may further comprise fillers, such as inorganic ceramic particles and the like. Optionally, the inorganic ceramic particles may be disposed on a surface of the first substrate layer away from the acid-scavenging material and close to the electrode plate, on a surface of the second substrate layer away from the acid-scavenging material and close to the electrode plate, or within apertures of the first substrate layer and the second substrate layer.

In some embodiments, the multi-layer composite separator comprises a first substrate layer and a second substrate layer, and the multi-layer composite separator further comprises a water-scavenging material and an acid-scavenging material, the acid-scavenging material being disposed between the first and the second substrate layers, and the water-scavenging material being disposed on the surface of at least one of the first and the second substrate layers; the water-scavenging material comprising at least one of a molecular sieve, and a super absorbent resin; the acid-scavenging material has a pH of 7 to 11.5, optionally 7 to 10, and further optionally 7.2 to 9.3; the mass ratio of the acid-scavenging material to the water-scavenging material in the multi-layer composite separator is from 1 to 3, optionally from 1 to 1.5. The multi-layer composite separator is formed by employing a water-scavenging material with high water-absorbing capacity and a weakly alkaline acid-scavenging material; through a physical adsorption, chemical bonding (e.g., acid-base neutralization reaction) and other effects, the multi-layer composite separator effectively immobilizes the free water and HF inside the battery on the water-scavenging material and the acid-scavenging material, and thus it can continuously and effectively reduce the content of free water and HF inside the battery, and thus reduce the negative effects of water and HF on the secondary battery, so as to enable the secondary battery to have both high energy density and long service life.

In some embodiments, the multi-layer composite separator comprises a first substrate layer, a second substrate layer, and a functional layer disposed between the first substrate layer and the second substrate layer, and the functional layer comprises a water-scavenging material as well as an acid-scavenging material, and based on the total mass of the functional layer, the content of the acid-scavenging material is from 20% to 50% by mass, the content of the water-scavenging material is from 15% to 50% by mass, and the mass ratio of the acid-scavenging material to the water-scavenging material is from 1 to 3, optionally from 1 to 1.5; the water-scavenging material comprises at least one of molecular sieve, and super absorbent resin; and the pH of the acid-scavenging material is from 7 to 11.5, optionally from 7 to 10, and further optionally from 7.2 to 9.3. The multi-layered composite separator is made by employing a water-scavenging material having high water-absorbing capacity and a weakly alkaline acid-scavenging material, under various effects such as physical adsorption and chemical bonding (e.g., acid-base neutralization reaction), the free water and HF inside the battery are effectively fixed on the water-scavenging material and the acid-scavenging material, and thus the free water and HF content inside the battery can be continuously and effectively reduced, thereby reducing the negative effects of the water and HF on the secondary battery, and enabling the secondary battery to have both high energy density and long service life.

[Preparation method]

The first aspect of the present application embodiment further provides a method for preparing a multi-layer composite separator. The multi-layer composite separator may be prepared in accordance with methods known in the art.

In some embodiments, the multi-layer composite separator can be prepared according to the following steps: dispersing a water-scavenging material, an acid-scavenging material, a binder, and optional additives in a solvent and mixing well to form a slurry; applying the slurry on the surface of one of the substrate layers, and then covering the surface of the slurry with another substrate layer with, and then obtaining the multi-layer composite separator after drying and cold pressing.

In some other embodiments, the multi-layer composite separator can also be prepared in accordance with the following steps: dispersing the acid-scavenging material, the binder, and optional additives in a solvent and mixing them uniformly to form a first slurry, dispersing the water-scavenging material, the binder, and optional additives in a solvent and mixing them uniformly to form a second slurry; applying the first slurry on one of the surfaces of one of the substrate layers, and then covering the surface of the first slurry with another substrate layer; applying the second slurry on the surface of any one of the substrate layers away from the acid-scavenging material, and the multi-layer composite separator is obtained after drying and cold pressing.

The solvent may be, but is not limited to, N-methylpyrrolidone (NMP). The binder may include, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoroacrylene copolymer, and fluorine-containing acrylate resin. The additives may include a dispersant, such as cetyltrimethylammonium bromide and the like.

It is to be noted that the relevant structure of the multi-layer composite separator prepared by the above method can be seen in the multi-layer composite separator provided in the above embodiments.

**Secondary battery**

A second aspect of embodiments of the present application provides a secondary battery. The present application does not specifically limit the type of the secondary battery, for example, the secondary battery may be a lithium-ion battery, a sodium-ion battery, etc., and in particular, the secondary battery is a lithium-ion secondary battery.

In some embodiments, the secondary battery comprises a positive electrode plate, a negative electrode plate, an electrolyte, and a separator, the separator adopting a multi-layer composite separator as described in any of the embodiments of the first aspect of the present application, wherein the separator is disposed between the positive electrode plate and the negative electrode plate, which mainly functions as preventing short circuit of the positive and negative electrodes as well as in reducing the content of free water and HF inside the battery.

In some embodiments, the content of water in the secondary battery is A ppm, based on the total mass of the positive electrode plate and the negative electrode plate, the content of the water-scavenging material is B ppm, based on the total mass of the multi-layer composite separator, and A and B satisfy the following relation: $3 \leq B/A \leq 5$.

When B/A is small, it may not be effective to reduce the free water and HF inside the battery; and when B/A is large, the excessive amount of the water-scavenging material is large, and its improvement effect on the performance of the secondary battery will not continue to increase, but the mass of the secondary battery increases, thereby reducing the energy density of the secondary battery. When the B/A is within a suitable range, it is possible to continuously and effectively reduce the content of free water and HF inside the battery, thereby reducing the negative effects of water and HF on the secondary battery, so that the secondary battery has a long service life, while the secondary battery also has a high energy density.

The water in the secondary battery mainly consists of three parts, namely, trace water remaining in the positive electrode plate, trace water remaining in the negative electrode plate, and trace water in the electrolyte. The content of water in the secondary battery is obtained by the following method: testing the mass of water in the prepared positive electrode plate, negative electrode plate, and electrolyte, respectively, and obtaining the total mass of water; dividing the total mass of water obtained by the total mass of the positive electrode plate and the negative electrode plate, then obtaining the content of water in the secondary battery (A ppm). The water in the positive electrode plate, the negative electrode plate and the electrolyte can be tested by Karl Fischer moisture meter, for example, MA-30 Intelligent Karl Fischer Moisture Meter.

Selecting a suitable mass of the water-scavenging material based on the above mentioned water content (A ppm) in the secondary battery not only can continuously and effectively reduce the free water and HF content inside the battery, reduce the negative impact of water and HF on the secondary battery, and enable the secondary battery to have a long service life, but also enable the secondary battery to have a high energy density.

Typically, the content A ppm of water in the secondary battery is between 20 ppm and 600 ppm, based on the total mass of the positive electrode plate and the negative electrode plate. Further, the water-scavenging material may be added in an amount such that it satisfies a content B ppm of the water-scavenging material between 60 ppm and 3000 ppm, based on the total mass of said multi-layer composite separator.

In some embodiments, the content of HF in the electrolyte is C ppm based on the total mass of the electrolyte, the content of the acid-scavenging material is D ppm based on the total mass of said electrolyte, and C and D satisfy the following relation: $1 \leq D/C \leq 2$.

When D/C is small, it may not be effective to reduce the free water and HF inside the battery; and when D/C is large, the excessive amount of the acid-scavenging material is large, and its improvement effect on the performance of the secondary battery will not continue to increase, but the mass of the secondary battery increases, thereby reducing the energy density of the secondary battery. When the D/C is in a suitable range, it is possible to continuously and effectively reduce the content of free water and HF inside the battery, thereby reducing the negative effects of water and HF on the secondary battery, so that the secondary battery has a long service life, while the secondary battery also has a high energy density.

Selecting a suitable amount of the acid-scavenging material based on the content of HF (C ppm) in the electrolyte not only continuously and effectively reduces the content of free water and HF inside the battery, thereby reducing the negative impact of water and HF on the secondary battery and enabling the secondary battery to have a long service life, but at the same time enabling the secondary battery to have a high energy density.

The content of HF (C ppm) in the electrolyte can be obtained by titration, for example with reference to HG/T 4067-2015. An exemplary test method comprises the following steps: adding 15 g of an electrolyte sample to 100 ml of an ice-water mixture, using bromothymol blue as an indicator, and titrating the solution with a standard titration solution of sodium hydroxide until the solution turns blue as the end point of the reaction, recording the volume of sodium hydroxide standard titration solution as Vi; in 100 ml of ice-water mixture adding bromothymol blue as indicator, titrating with sodium hydroxide standard titration solution until the solution turns blue as the end point of the reaction, recording the volume of sodium hydroxide standard titration solution as $V_0$. $V_i$-$V_0$ is the volume of sodium hydroxide standard titration solution consumed, so as to get the mass of HF and its content in the electrolyte.

Typically, the content C ppm of HF in the electrolyte is between 20 ppm and 500 ppm based on the total mass of the electrolyte. Further, the acid-scavenging material may be added in an amount such that the content D ppm of the acid-scavenging material is between 20 ppm and 1000 ppm based on the total mass of the electrolyte.

In some embodiments, the pH of the acid-scavenging material, the content C ppm of HF in the electrolyte, and the content D ppm of the acid-scavenging material also satisfy the following relationship: $lgpH+0.5 \leq D/C \leq 2$. The inventors have found after much research and practice that when the content D ppm of said acid-scavenging material satisfies the above relationship $lgpH+0.5 \leq D/C \leq 2$, the content of free HF as well as water inside the secondary battery is less, and the secondary battery can have longer service life and higher energy density.

[Electrolyte]

In some embodiments, the electrolyte comprises an electrolyte salt and a solvent. The types of the electrolyte salt and the solvent are not specifically limited and can be selected according to actual needs.

When the secondary battery of the present application is a lithium-ion battery, in particular a lithium-ion secondary battery, as an example, the electrolyte salt may comprise at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis(trifluoromethylsulfonyl)imide (LiTFSI), lithium trifluoromethane sulfonate (LiTFS), lithium difluorooxalate borate (LiDFOB), lithium dioxalate borate (LiBOB), lithium difluorophosphate ($LiPO_2F_2$), lithium difluorodioxalate phosphate (LiDFOP) and lithium tetrafluorooxalate phosphate (LiTFOP).

When the secondary battery of the present application is a sodium-ion battery, the electrolyte salt may include at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonimide (NaFSI), sodium bis(trifluoromethanesulfonyl)imide (NaTFSI).

In some embodiments, the solvent may comprise, as an example, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery. As an example, the additives may include, but are not limited to, at least one of vinylidene carbonate (VC), fluoroethylene carbonate (FEC), 1,3-propane sultone (PS).

**Positive electrode plate**

In some embodiments, the positive electrode plate comprises a positive electrode current collector and a positive electrode film layer provided on at least one surface of the positive electrode current collector. For example, the positive electrode current collector has two surfaces opposite to each other in the direction of its own thickness, and the positive electrode film layer is provided on either or both of two opposite surfaces of the positive electrode current collector.

The positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymeric material matrix may comprise at least one of polypropylene (PP), polyethylene terephthalate (PET), polybutylene terephthalate (PBT), polystyrene (PS), and polyethylene (PE).

The positive electrode film typically comprises a positive electrode active material, an optional binder and an optional conductive agent. The positive electrode film layer is typically formed by applying a positive electrode slurry to the positive electrode current collector, drying, and cold pressing. The positive electrode slurry is typically formed by dispersing the positive electrode active material, the optional conductive agent, the optional binder, and any other components in a solvent and mixing well. The solvent may be N-methylpyrrolidone (NMP), but is not limited thereto. As examples, the binder for the positive electrode film may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoroacrylene copolymer, and fluoro-containing acrylate resin. As an example, the conductive agent for the positive electrode film comprises at least one of superconducting carbon, conductive graphite, acetylene black, carbon black, Ketjen black, carbon dots, carbon nanotubes, graphene, and carbon nanofibers.

The positive electrode active material may be a positive electrode active material known in the art for use in secondary batteries.

When the secondary battery of the present application is a lithium-ion battery, in particular a lithium-ion secondary battery, the positive electrode active material may comprise at least one of a lithium transition metal oxide, a lithium-containing phosphate with an olivine structure, and their respective modified compounds. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, and modified compounds thereof. Examples of lithium-containing phosphates with an olivine structure may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, and their respective modified compounds. The present application is not limited to these materials, and other conventionally known materials that can be used as positive electrode active materials for lithium ion batteries may also be used. These positive electrode active materials may be used alone or in a combination of more than two.

In some embodiments, in order to further increase the energy density of the secondary battery, the positive electrode active material for the lithium-ion battery may include at least one of the lithium transition metal oxides shown in Formula 1 and modified compounds thereof,

$$Li_aNi_bCo_cM_dO_eA_f \qquad \text{Formula 1}$$

in Formula 1, $0.8 \leq a \leq 1.2$, $0.5 \leq b < 1$, $0 < c < 1$, $0 < d < 1$, $1 \leq e \leq 2$, $0 \leq f < 1$, M is selected from at least one of Mn, Al, Zr, Zn, Cu, Cr, Mg, Fe, V, Ti, and B, and A is selected from at least one of N, F, S, and Cl.

As an example, the positive electrode active material for the lithium-ion battery may include at least one of $LiCoO_2$, $LiNiO_2$, $LiMnO_2$, $LiMn_2O_4$, $LiNi_{1/3}Co_{1/3}Mn_{1/3}O_2$(NCM333), $LiNi_{0.5}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811), $LiNi_{0.85}Co_{0.15}Al_{0.05}O_2$, $LiFePO_4$, and $LiMnPO_4$.

When the secondary battery of the present application is a sodium-ion battery, the positive electrode active material may include at least one of a sodium-containing transition metal oxide, a polyanionic material (e.g., a phosphate, a fluorophosphate, a pyrophosphate, a sulfate, and the like), and a Prussian blue compound. The present application is not limited to these materials, and other conventionally known materials that may be used as positive electrode active materials for sodium-ion batteries may also be used. These positive electrode active materials can be used alone, or in combination of two or more materials.

As an example, the positive electrode active material for the sodium-ion battery may include at least one $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials, and the material shown in Formula $A_aM_b(PO_4)_cO_xY_{3-x}$. A is selected from at least one of $H^+$, $Li^+$, $Na^+$, $K^+$, and $NH4^+$; M is a transition metal cation, optionally at least one of V, Ti, Mn, Fe, Co, Ni, Cu, and Zn one; Y is a halogen anion, optionally at least one of F, Cl and Br; $0 < a \leq 4$; $0 < b \leq 2$; $1 \leq c \leq 3$; $0 \leq x \leq 2$.

In the present application, each of the above modified compounds of the positive electrode active material may be a doping modification, or a surface coating modification, of the positive electrode active material.

[Negative electrode plate]

In some embodiments, the negative electrode plate comprises a negative electrode current collector and a negative electrode film layer provided on at least one surface of the negative electrode current collector. For example, the negative electrode current collector has two surfaces opposite to each other in the direction of its own thickness, and the negative electrode film layer is provided on either or both of two opposite surfaces of the negative electrode current collector.

The negative electrode current collector may be a metal foil or a composite collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymeric material matrix may comprise at least one of polypropylene (PP), polyethylene terephthalate (PET), polybutylene terephthalate (PBT), polystyrene (PS), and polyethylene (PE).

The negative electrode film typically comprises a negative electrode active material, an optional binder and an optional conductive agent. The negative electrode film is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) or deionized water, but is not limited thereto. As an example, the binder for negative electrode film may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS). As an example, the conductive agent for negative electrode film may include at least one of superconducting carbon, conductive graphite, acetylene black, carbon black, Ketjen black, carbon dots, carbon nanotubes, graphene, and carbon nanofibers. The other additives may include thickeners, e.g., sodium carboxymethyl cellulose (CMC), and PTC thermistor material, etc.

The negative electrode active material may be a negative electrode active material known in the art for use in secondary batteries. By way of example, the negative electrode active material includes, but is not limited to, at least one of carbon-based material, silicon-based material, tin-based material, and lithium titanate. The carbon-based material may include at least one of natural graphite, artificial graphite, soft carbon, and hard carbon. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

The negative electrode plate of the present application does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer covering the surface of the negative electrode film layer.

In some embodiments, the positive electrode plate, the multi-layer composite separator, and the negative electrode plate may be made into an electrode assembly by a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as at least one of polypropylene (PP), polybutylene terephthalate (PBT), and polybutylene succinate (PBS).

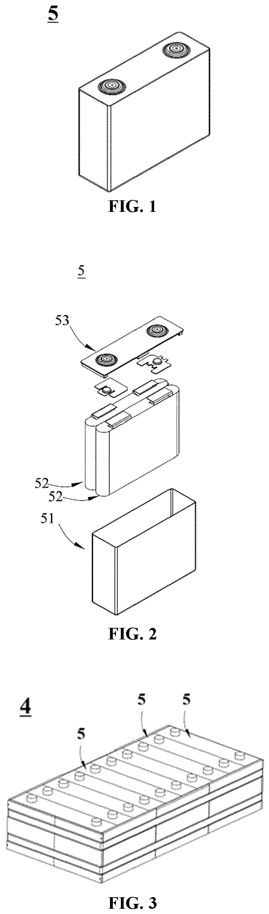

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a laminating process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

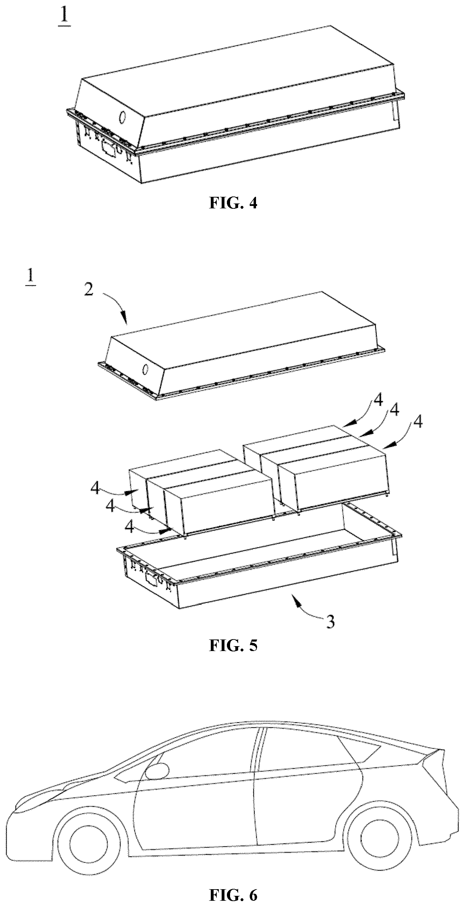

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

[Method of preparation]

The second aspect of the present application further provides a method for preparing a secondary battery. The method comprises the following steps: S100, providing a positive electrode plate, a negative electrode plate, a multi-layer composite separator, and an electrolyte, wherein the multi-layer composite separator comprises a first substrate layer, a second substrate layer, a water-scavenging material, and an acid-scavenging material, wherein the acid-scavenging material is disposed between the first substrate layer and the second substrate layer, and the water-scavenging material is disposed on at least one surface of the first substrate layer and the second substrate layer; S200, assembling the positive electrode plate, the multi-layer composite separator, the negative electrode plate, and the electrolyte into a secondary battery.

In some embodiments, S100 further comprises the following steps: S101, testing the mass of water in the positive electrode plate and the negative electrode plate, and the mass of water and HF in the electrolyte, and obtaining the content A ppm of water in the secondary battery based on the total mass of the positive electrode plate and the negative electrode plate, and the content C ppm of HF in the electrolyte based on the total mass of the electrolyte; S102, adding the water-scavenging material in an amount such that the content B ppm of the water-scavenging material based on the total mass of the multi-layer composite separator satisfies $3 \leq B/A \leq 5$, and adding the acid-scavenging material in an amount such that the content D ppm of the acid-scavenging material based on the total mass of the electrolyte satisfies $1 \leq D/C \leq 2$, and optionally, adding the acid-scavenging material is in an amount such that it further satisfies $\lg pH + 0.5 \leq D/C \leq 2$, pH being the pH of the acid-scavenging material.

Selecting a suitable mass of the water-scavenging material based on the content of water in the secondary battery (A ppm) and a suitable mass of the acid-scavenging material based on the content of HF in the electrolyte (C ppm) not only continuously and effectively reduces the content of free water and HF inside the battery, reduces the negative impact of water and HF on the secondary battery, and enables the secondary battery to have a long service life, but also enables the secondary battery to have a high energy density.

In some embodiments, S200 may further comprise the following steps: forming an electrode assembly by winding process or stacking process of the above-mentioned positive electrode plate, separator, and negative electrode plate, placing the electrode assembly in an outer package, drying it, injecting electrolyte, and obtaining the secondary battery after vacuum encapsulation, standing, formation, shaping, aging and other processes.

It is to be noted that the relevant structure of the secondary battery prepared by the preparation method of the secondary battery described above can be seen in the secondary battery provided in the embodiments described above.

**Electrical device**

A third aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

## Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

## Example 1

### Preparation of separator

Titanium silicon molecular sieve TS-1 (water-scavenging material) with a specific surface area of 650 $m^2/g$, a pore size of 3 nm and a Dv50 of 2 $\mu m$ was mixed with hexamethyldisilazane (acid-scavenging material) with a pH of 7.5, polyvinylidene fluoride (binder), and cetyltrimethylammonium bromide in the appropriate amount of solvent NMP at the mass ratio of 35:45: 19: 1 for 2h~3h to form a slurry. The slurry was applied on the surface of a porous polyethylene film (the first substrate layer) with a thickness of 14 $\mu m$, and then another porous polyethylene film (the second substrate layer) with a thickness of 8 $\mu m$ was covered on the surface of the slurry, and a multi-layer composite separator was obtained after drying and cold pressing. The thickness of the slurry layer was 6 $\mu m$.

### Preparation of positive electrode plate

The positive electrode active material $LiFePO_4$, the conductive agent carbon black (Super P), and the binder polyvinylidene fluoride (PVDF) were fully stirred and mixed in an appropriate amount of solvent NMP at a mass ratio of 80:10:10 to form a positive electrode slurry with a solid content of 50%; the positive electrode slurry was uniformly applied on the surface of the positive electrode current collector aluminum foil, dried at 85°C, and then cold pressed; after cutting the edge, cutting and slitting, it was then dried under vacuum at 85°C for 4h to obtain the positive electrode plate.

### Preparation of negative electrode plate

The negative electrode active material graphite, the conductive agent carbon black (Super P), the thickener sodium carboxymethyl cellulose (CMC-Na), the binder styrene-butadiene rubber (SBR) were fully stirred and mixed in the appropriate amount of solvent deionized water at a mass ratio of 80:15:3:2, to form the negative electrode slurry with a solid content of 30%; the negative electrode slurry was uniformly applied on the surface of the negative electrode current collector copper foil, dried at 85°C, and then cold pressed; after cutting the edge, cutting and slitting, it was then dried under vacuum at 120°C for 12h to obtain the negative electrode plate.

### Preparation of electrolyte

Ethylene carbonate (EC), ethyl methyl carbonate (EMC) and diethyl carbonate (DEC) were mixed at a volume ratio of 1:1:1 to obtain the organic solvent; $LiPF_6$ was dissolved uniformly in the above organic solvent to obtain the electrolyte, and the concentration of $LiPF_6$ was 1 mol/L.

### Preparation of secondary battery

The positive electrode plate, the multi-layer composite separator, and the negative electrode plate were stacked and wound in sequence to obtain an electrode assembly; the electrode assembly was put into an outer package, the above electrolyte was added, and the secondary battery was obtained after encapsulation, standing, formation, aging and other processes.

The content of water in the secondary battery was obtained by the following method: the mass of water in the prepared positive electrode plate, negative electrode plate and electrolyte was tested by MA-30 intelligent Karl Fischer moisture meter respectively, and the total mass of water was obtained; the content of water in the secondary battery was obtained by dividing the total mass of water obtained by the total mass of positive electrode plate and negative electrode plate, i.e., the content of water in the secondary battery was obtained (as A ppm).

15g of the above electrolyte sample was added into 100ml of ice-water mixture, bromothymol blue was used as indicator, and the mixture was titrated with sodium hydroxide standard titration solution until the solution turned blue as the end point of the reaction, and at this time the volume of sodium hydroxide standard titration solution was recorded as Vi; bromothymol blue was added into 100ml of ice-water mixture as indicator, and the mixture was titrated with sodium hydroxide standard titration solution until the solution turned blue as the end point of the reaction, and at this time the volume of sodium hydroxide standard titration solution was recorded as $V_0$. Vi-$V_0$ was the volume of the sodium hydroxide standard titration solution actually consumed, from which the mass of HF and its content in the electrolyte (C ppm) were calculated.

Based on the total mass of the positive electrode plate and the negative electrode plate, the content A ppm of water in the secondary battery was 50 ppm; based on the total mass of the electrolyte, the content C ppm of HF in the electrolyte was 100 ppm; based on the total mass of said multi-layer composite separator, the content B ppm of the water-scavenging material was 150 ppm; based on the total mass of the electrolyte, the content D ppm of acid-scavenging material was 187 ppm.

Examples 2 to 16

The method for preparing the secondary battery was similar to that of Example 1, except that the preparation parameters of the separator were different, as shown in Table 1. By adjusting one or more parameters of the composition of the separator of each example, including one or more parameters of the types and thicknesses of the first substrate layer, the types and thicknesses of the second substrate layer, the thicknesses of the functional layer, the types of each component of the functional layer, and the mass percentages, etc. The secondary battery having a separator that satisfies the requirements of each example, including the content of the water-scavenging material and acid-scavenging material, can be obtained.

Comparative Example 1

The method for preparing the secondary battery was similar to that of Example 1, except that a porous polyethylene film with a thickness of 14 $\mu$m was used as the separator.

Comparative Example 2

The method for preparing the secondary battery was similar to that of Example 1, except that no water-scavenging material was added in the preparation of the separator.

Comparative Example 3

The method for preparing the secondary battery was similar to that of Example 1, except that no acid-scavenging material was added in the preparation of the separator.

Comparative Example 4

The method for preparing the secondary battery was similar to that of Example 1, except that the preparation parameters of the separator and the electrolyte were different, a porous polyethylene film with a thickness of 14 $\mu$m was used as the separator, and 1% hexamethyldisilazane was added as an additive for the electrolyte.

Test section

At 25°C, the secondary battery of each example and comparative example was charged with 1C constant current to 3.8V, and continued to charge with constant voltage to 0.05C, at this time, the secondary battery was fully charged, and the charging capacity at this time was recorded, i.e., the charging capacity at the 1st cycle; after the above secondary battery was standing for 5mins, discharged to 2.0V with 1C constant current, which was a cyclic charging and discharging process, and the discharging capacity at this time was recorded, i.e., the discharging capacity at the 1st cycle. The cyclic charging/discharging test of the secondary battery was carried out according to the above method, and the discharging capacity for each cycle was recorded.

The capacity retention rate (%) of the secondary battery at 200 cycles = discharging capacity at the 200th cycle /discharging capacity at the 1st cycle × 100%.

Table 1 shown the test results of Examples 1 to 16 and Comparative Examples 1 to 4.

As can be seen from the test results in Table 1, the multi-layer composite separator of the present application employs both a water-scavenging material and an acid-scavenging material, which effectively immobilizes the free water and HF inside the battery on the water-scavenging material and said acid-scavenging material under a variety of effects, such as physical adsorption, chemical bonding, and so forth, so that it can continually and efficiently reduce the content of free water and HF inside the battery, and thus reduce the negative effects of water and HF on the secondary battery, resulting in a better cycling performance of the secondary battery.

Comparative Example 2 and Comparative Example 3, in which only a single acid-scavenging material or water-scavenging material is used, shown some improvement in the cycling performance of the secondary battery compared to Comparative Example 1, but the improvement was not good. The possible reason for this is that the bound water in the electrode plate, after being released into the electrolyte, reacts with the fluorine-containing electrolyte salt to form HF, and similarly, HF can react with the inorganic electrolyte salt component (e.g., lithium carbonate, etc.) in the solid electrolyte interfacial film on the surface of the negative electrode active material to be converted into water again. Therefore, use of acid-scavenging materials or water-scavenging materials alone does not effectively improve the cycling performance of the secondary battery.

In Comparative Example 4, the acid-scavenging material hexamethyldisilazane was added to the electrolyte, and the cycling performance of the secondary battery was somewhat improved compared with that of Comparative Example 1, but the improvement was not good. The possible reason for this is that hexamethyldisilazane has poor compatibility with the electrolyte, and hexamethyldisilazane is prone to form a precipitate after prolonged use, which in turn affects the effect of acid removal; at the same time, the precipitate is easily deposited on the surface of the separator, which results in the blocking of the holes in the separator and affects the cycling performance of the secondary battery.

As can be seen from the test results of Examples 1 to 5, the mass of the water-scavenging material should not be excessively high or excessively low. When the B/A was in a suitable range, it can continuously and effectively reduce the free water and HF content inside the battery, thereby reducing the negative impact of water and HF on the secondary battery, so that the secondary battery has a long service life, and the secondary battery also has a high energy density. When B/A was small, the free water and HF inside the battery may not be effectively reduced, and thus the cycling performance of the secondary battery was poor; and when B/A was large, the excessive amount of the water-scavenging material is large, and its improvement effect on the performance of the secondary battery did not continue to increase, but the mass of the secondary battery increased, thereby reducing the energy density of the secondary battery. Therefore, optionally, $3 \leq B/A \leq 5$.

As can be seen from the test results of Examples 6 to 9, the mass of the acid-scavenging material should not be excessively high or excessively low. When the D/C was in a suitable range, it can continuously and effectively reduce the content of free water and HF inside the battery, and thus reduce the negative effects of water and HF on the secondary battery, so that the secondary battery has a long service life, and at the same time the secondary battery also has a high energy density. When D/C was small, the free water and HF inside the battery may not be effectively reduced, and thus the cycling performance of the secondary battery was poor; and when D/C was large, the excessive amount of the acid-scavenging material was large, and its improvement effect on the performance of the secondary battery did not continue to increase, but the mass of the secondary battery increased, thereby reducing the energy density of the secondary battery. Therefore, optionally, $1 \leq D/C \leq 2$.

From the test results of Examples 2, 6 to 9, it can also be seen that the secondary battery can have a better cycling performance when the pH of the acid-scavenging material, the content C ppm of HF in the electrolyte, and the content D ppm of the acid-scavenging material further satisfied $\lg pH + 0.5 \leq D/C \leq 2$.

As can be seen from the test results of Examples 10 to 13, the pH of the acid-scavenging material should not be excessively high, and a higher pH of the acid-scavenging material may induce decomposition of the electrolyte salt, which in turn reduced the cycling performance of the secondary battery. Therefore, the pH of the acid-scavenging material may be from 7 to 11.5, optionally from 7 to 10, and further optionally from 7.2 to 9.3.

As can be seen from the test results of Examples 14 to 16, the specific surface area of the molecular sieve used as the water-scavenging material should not be excessively high or excessively low. When the specific surface area was high, more electrolyte may be absorbed, which was unfavorable for the electrolyte to infiltrate the electrode plate, and thus the cycling performance of the secondary battery was slightly poorer; when the specific surface area was small, the adsorption ability for the free water inside the battery was poorer, and it may be impossible to ensure that the secondary battery has a lower content of free water and HF during a long-term charging and discharging cycling process, and thus the cycling performance of the secondary battery was also slightly poorer. Therefore, optionally, the specific surface area of the molecular sieve was from 350 m$^2$/g to 1000 m$^2$/g, and further optionally from 650 m$^2$/g to 800 m$^2$/g.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

Table 1

| No. | Water-scavenging material | | | | Acid-scavenging material | | A (ppm) | B (ppm) | B/A | C (ppm) | D (ppm) | D/C | lgpH+0.5 | capacity retention rate (%)at 200 cycles |
|---|---|---|---|---|---|---|---|---|---|---|---|---|---|---|
| | Type | BET (m²/g) | Dv50 (um) | Pore size (nm) | Type | pH | | | | | | | | |
| Example 1 | Titanium silicon molecular sieveTS-1 | 650 | 2 | 3 | Hexamethyldisilazane | 7.5 | 50 | 150 | 3 | 100 | 187 | 1.87 | 1.38 | 98.3% |
| Example 2 | Titanium silicon molecular sieveTS-1 | 650 | 2 | 3 | Hexamethyldisilazane | 7.5 | 50 | 200 | 4 | 100 | 187 | 1.87 | 1.38 | 98.9% |
| Example 3 | Titanium silicon molecular sieveTS-1 | 650 | 2 | 3 | Hexamethyldisilazane | 7.5 | 50 | 250 | 5 | 100 | 187 | 1.87 | 1.38 | 98.7% |
| Example 4 | Titanium silicon molecular sieveTS-1 | 650 | 2 | 3 | Hexamethyldisilazane | 7.5 | 50 | 125 | 2.5 | 100 | 187 | 1.87 | 1.38 | 95.8% |
| Example 5 | Titanium silicon molecular sieveTS-1 | 650 | 2 | 3 | Hexamethyldisilazane | 7.5 | 50 | 275 | 5.5 | 100 | 187 | 1.87 | 1.38 | 98.7% |
| Example 6 | Titanium silicon molecular sieveTS-1 | 650 | 2 | 3 | Hexamethyldisilazane | 7.5 | 50 | 200 | 4 | 100 | 100 | 1 | 1.38 | 97.9% |
| Example 7 | Titanium silicon molecular sieveTS-1 | 650 | 2 | 3 | Hexamethyldisilazane | 7.5 | 50 | 200 | 4 | 100 | 200 | 2 | 1.38 | 98.1% |
| Example 8 | Titanium silicon molecular sieveTS-1 | 650 | 2 | 3 | Hexamethyldisilazane | 7.5 | 50 | 200 | 4 | 100 | 50 | 0.5 | 1.38 | 94.2% |
| Example 9 | Titanium silicon molecular sieveTS-1 | 650 | 2 | 3 | Hexamethyldisilazane | 7.5 | 50 | 200 | 4 | 100 | 250 | 2.5 | 1.38 | 98.1% |

| No. | Water-scavenging material | | | | Acid-scavenging material | | A (ppm) | B (ppm) | B/A | C (ppm) | D (ppm) | D/C | lgpH+0.5 | capacity retention rate (%)at 200 cycles |
|---|---|---|---|---|---|---|---|---|---|---|---|---|---|---|
| | Type | BET (m²/g) | Dv50 (um) | Pore size (nm) | Type | pH | | | | | | | | |
| Example 10 | Sodium polyacrylate resin | / | 6 | / | N,N-Dimethylpropionamide | 7.2 | 50 | 200 | 4 | 100 | 150 | 1.5 | 1.36 | 98.0% |
| Example 11 | Sodium polyacrylate resin | / | 6 | / | Trimethylsilyl diethylamine | 9.3 | 50 | 200 | 4 | 100 | 170 | 1.7 | 1.47 | 99.2% |
| Example 12 | Sodium polyacrylate resin | / | 6 | / | Lithium bicarbonate | 100 | 50 | 200 | 4 | 100 | 200 | 2 | 1.50 | 99.0% |
| Example 13 | Sodium polyacrylate resin | / | 6 | / | Lithium carbonate | 11.3 | 50 | 200 | 4 | 100 | 196 | 1.96 | 1.55 | 94.5% |
| Example 14 | Titanium silicon molecular sieveTS-1 | 800 | 5 | 2.5 | Hexamethyldisilazane | 7.5 | 50 | 200 | 4 | 100 | 150 | 1.5 | 1.38 | 97.3% |
| Example 15 | Titanium silicon molecular sieveTS-1 | 1100 | 5 | 1.8 | Hexamethyldisilazane | 7.5 | 50 | 200 | 4 | 100 | 150 | 1.5 | 1.38 | 96.3% |
| Example 16 | Titanium silicon molecular sieveTS-1 | 300 | 5 | 4 | Hexamethyldisilazane | 7.5 | 50 | 200 | 4 | 100 | 150 | 1.5 | 1.38 | 93.4% |
| Comparati ve Example 1 | / | / | / | / | / | / | 50 | / | / | 100 | / | / | / | 65.3% |
| Comparati ve Example 2 | / | / | / | / | Hexamethyldisilazane | 7.5 | 50 | / | / | 100 | 187 | 1.87 | 1.38 | 73.2% |
| Comparati ve Example 3 | Titanium silicon molecular sieveTS-1 | 650 | 2 | 3 | / | / | 50 | 200 | 4 | 100 | / | / | / | 77.8% |

EP 4 354 628 A1

(continued)

| No. | Water-scavenging material | | | | Acid-scavenging material | | A (ppm) | B (ppm) | B/A | C (ppm) | D (ppm) | D/C | lgpH+0.5 | capacity retention rate (%)at 200 cycles |
|---|---|---|---|---|---|---|---|---|---|---|---|---|---|---|
| | Type | BET (m$^2$/g) | Dv50 (um) | Pore size (nm) | Type | pH | | | | | | | | |
| Comparative Example 4 | / | / | / | / | / | / | 50 | / | / | 100 | / | / | / | 70.7% |

**Claims**

1. A multi-layer composite separator comprising a first substrate layer and a second substrate layer, wherein the multi-layer composite separator further comprises a water-scavenging material and an acid-scavenging material, the acid-scavenging material being disposed between the first substrate layer and the second substrate layer, and the water-scavenging material being disposed on at least one surface of the first substrate layer and the second substrate layer.

2. The multi-layer composite separator according to claim 1, the multi-layer composite separator comprises a functional layer disposed between the first substrate layer and the second substrate layer, wherein the functional layer comprises a water-scavenging material and an acid-scavenging material;

   optionally, based on the total mass of the functional layer, a mass percentage of the acid-scavenging material is from 20% to 50% and a mass percentage of the water-scavenging material is from 15% to 50%;
   optionally, the functional layer has a thickness of 1 $\mu$m to 100 $\mu$m. Optionally, the functional layer has a thickness of 4 $\mu$m to 50 $\mu$m.

3. The multi-layer composite separator according to claim 1 or 2, wherein a mass ratio of the acid-scavenging material to the water-scavenging material in the multi-layer composite separator is from 1 to 3, optionally from 1 to 1.5.

4. The multi-layer composite separator according to any of claims 1 to 3, wherein the water-scavenging material comprises at least one of a molecular sieve or a super absorbent resin.

5. The multi-layer composite separator according to claim 4, wherein the molecular sieve satisfies at least one of the following conditions (1) to (4):

   (1) the molecular sieve has a static water adsorption amount of 15% or more at 25°C and 30% relative humidity;
   (2) the molecular sieve has a pore size of 0.3 nm to 50 nm, optionally 0.5 nm to 15 nm;
   (3) the molecular sieve has a volume-averaged particle size Dv50 of 1 $\mu$m to 10 $\mu$m, optionally 2 $\mu$m to 6 $\mu$m; and
   (4) the molecular sieve has a specific surface area of 350m$^2$/g~1000m$^2$/g, optionally 650m$^2$/g~800m$^2$/g;
   wherein the super absorbent resin satisfies at least one of the following conditions (5) to (6):
   (5) the super absorbent resin has a water absorbency of more than 100 times; and
   (6) the super absorbent resin has a solubility in water at 25°C of less than 5%.

6. The multi-layer composite separator according to claim 4 or 5, wherein

   the molecular sieve comprises at least one of silica-based molecular sieve SBA-15, and titanium silicon molecular sieve TS-1; and/or
   the super absorbent resin comprises at least one of starch grafted acrylonitriles, starch grafted acrylics, starch grafted acrylamides, cellulose grafted acrylonitriles, cellulose grafted acrylics, cellulose grafted acrylamides, polyvinylalcohols, polyacrylic acids (salts), polyacrylamides, polyoxyethylenes, polyurethanes, vinyl acetate copolymers, and the respective modified compounds thereof;
   optionally, the super absorbent resin comprises at least one of a copolymer of polyvinyl alcohol and cyclic anhydride, a sodium polyacrylate resin, a copolymer of vinyl acetate and acrylate.

7. The multi-layer composite separator according to any of claims 1 to 6, wherein the acid-scavenging material has a pH of 7 to 11.5, optionally 7 to 10.

8. The multi-layer composite separator according to claim 7, wherein the acid-scavenging material comprises at least one of an inorganic alkaline lithium salt and an organic compound.

9. The multi-layer composite separator according to claim 8, wherein the inorganic alkaline lithium salt comprises at least one of lithium carbonate and lithium bicarbonate; and/or
   the molecular structure of the organic compound comprises at least one of an amide group, a silicon-nitrogen group, a silicon group, a carbon-nitrogen group, a sulfonate group, and a carboxylate ion. Optionally, the organic compound comprises at least one of lithium acetate, hexamethyldisilazane, heptamethyldisilazane, trimethylsilyl diethylamine, trimethylsilyl methanesulfonate, bis(trimethylsilyl)carbodiimide, N,N-dimethylpropionamide, N,N-dimethylacetamide, and N,N-dimethylformamide.

**10.** A secondary battery comprising a positive electrode plate, a negative electrode plate, an electrolyte, and a multi-layer composite separator according to any of claims 1 to 9.

**11.** The secondary battery according to claim 10, wherein based on the total mass of the positive electrode plate and the negative electrode plate, a content of water in the secondary battery is A ppm; based on the total mass of the multi-layer composite separator, a content of the water-scavenging material is B ppm, and A and B satisfy the following relation: $3 \leq B/A \leq 5$;
optionally,

$$20 \leq A \leq 600;$$

optionally,

$$60 \leq B \leq 3000.$$

**12.** The secondary battery according to claim 10 or 11, wherein based on the total mass of the electrolyte, a content of HF in the electrolyte is C ppm; based on the total mass of the electrolyte, a content of the acid-scavenging material is D ppm, and C and D satisfy the following relation: $1 \leq D/C \leq 2$;
optionally,

$$20 \leq C \leq 500;$$

optionally,

$$20 \leq D \leq 1000.$$

**13.** The secondary battery according to claim 12, wherein the pH of the acid-scavenging material, the content C ppm of HF in the electrolyte, and the content D ppm of the acid-scavenging material further satisfy the following relation: $\lg pH + 0.5 \leq D/C \leq 2$.

**14.** An electrical device comprising the secondary battery according to any of claims 10 to 13.

**5**

FIG. 1

**5**

53

52
52

51

FIG. 2

**4**    5    5

5

FIG. 3

1

**FIG. 4**

1

2

4

4

4

4

4

4

4

3

**FIG. 5**

**FIG. 6**

## INTERNATIONAL SEARCH REPORT

| International application No. |
| --- |
| **PCT/CN2022/135796** |

**A.    CLASSIFICATION OF SUBJECT MATTER**

H01M 50/449(2021.01)i;H01M 50/46(2021.01)i;H01M 10/0525(2010.01)i;H01M 10/613(2014.01)i

According to International Patent Classification (IPC) or to both national classification and IPC

**B.    FIELDS SEARCHED**

Minimum documentation searched (classification system followed by classification symbols)

IPC:H01M 50/-,H01M 10/-,H01M 2/-

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 隔膜, 隔离膜, 隔离器, 隔板, 除水, 吸水, 吸液, 储水, 去水, 脱水, 除酸, 去酸, 脱酸, 抑酸, separator, separat+, water, acid, remov+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 101044643 A (AMTEK RESEARCH INTERNATIONAL LLC) 26 September 2007 (2007-09-26)<br>    description, page 3, line 2-page 7, line 10 | 1-3, 10-14 |
| Y | CN 101044643 A (AMTEK RESEARCH INTERNATIONAL LLC) 26 September 2007 (2007-09-26)<br>    description, page 3, line 2-page 7, line 10 | 4-9 |
| Y | CN 1567614 A (HONGFUJIN PRECISION INDUSTRY (SHENZHEN) CO., LTD. et al.) 19 January 2005 (2005-01-19)<br>    description, page 1, the-third-to-last line-page 4, line 10 | 4-9 |
| Y | CN 113675531 A (NINGDE AMPEREX TECHNOLOGY LTD.) 19 November 2021 (2021-11-19)<br>    description, paragraphs 5-32 and 59-63 | 7-9 |
| Y | CN 106025359 A (ZHUHAI SMOOTHWAY ELECTRONIC MATERIALS CO., LTD.) 12 October 2016 (2016-10-12)<br>    description, paragraphs 4-14 | 7-9 |

☑ Further documents are listed in the continuation of Box C.     ☑ See patent family annex.

| | |
| --- | --- |
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **30 January 2023** | **10 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/135796**

| C. | DOCUMENTS CONSIDERED TO BE RELEVANT | |
|---|---|---|
| Category* | Citation of document, with indication, where appropriate, of the relevant passages | Relevant to claim No. |
| A | TW 200501471 A (HON HAI PRECISION INDUSTRY CO., LTD.) 01 January 2005 (2005-01-01)<br>    entire document | 1-14 |

Form PCT/ISA/210 (second sheet) (July 2022)

**INTERNATIONAL SEARCH REPORT**
Information on patent family members

International application No.

**PCT/CN2022/135796**

| Patent document cited in search report | | | Publication date (day/month/year) | Patent family member(s) | | | Publication date (day/month/year) |
|---|---|---|---|---|---|---|---|
| CN | 101044643 | A | 26 September 2007 | KR | 20060016794 | A | 22 February 2006 |
| | | | | US | 2004248012 | A1 | 09 December 2004 |
| | | | | JP | 2007525789 | A | 06 September 2007 |
| | | | | WO | 2005001956 | A2 | 06 January 2005 |
| | | | | WO | 2005001956 | A3 | 03 August 2006 |
| | | | | US | 7267909 | B2 | 11 September 2007 |
| | | | | CN | 101044643 | B | 16 May 2012 |
| CN | 1567614 | A | 19 January 2005 | CN | 1310352 | C | 11 April 2007 |
| CN | 113675531 | A | 19 November 2021 | None | | | |
| CN | 106025359 | A | 12 October 2016 | None | | | |
| TW | 200501471 | A | 01 January 2005 | TW | 234305 | B | 11 June 2005 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210099661
- GB 628786 A
- GB 190772016 T
- GB 195872017 T
- GB 228752008 T
- GB 229052008 T
- GB 692086 T